# EUROPÄISCHE PATENTSCHRIFT

(11) **EP 0 722 170 B1**
(45) Veröffentlichungstag und Bekanntmachung des Hinweises auf die Patenterteilung: **14.02.2001**
(21) Anmeldenummer: 95120346.2
(22) Anmeldetag: 21.12.1995
(51) Int. Cl.: G11B 33/04

(54) **Vorrichtung zur Aufnahme und/oder Entnahme flächiger Produkte**
Device for holding and removing of flat objects
Dispositif de rangement et de prélèvement d'objets plats

(30) Priorität: 11.01.1995 CH 6595; 06.09.1995 CH 252695
(43) Veröffentlichungstag der Anmeldung: 17.07.1996
(73) Patentinhaber: BARGY GmbH, 8854 Siebnen (CH)
(72) Erfinder: Gyovai, Geza, Dr., 8600 Dübendorf (CH)
(74) Vertreter: Althoff, Gerhard

(56) Entgegenhaltungen:
- DE-U- 9 107 451
- DE-U- 9 320 057
- DE-U- 9 401 555
- DE-U- 9 404 005
- DE-U- 9 412 484
- GB-A- 542 411
- IBM TECHNICAL DISCLOSURE BULLETIN, Bd. 26, Nr. 3A, August 1983, NEW YORK US, Seiten 1208-1209, XP002002941 W.H.BACHMAN ET AL: "Magnetic disk container"

## Beschreibung

Die Erfindung betrifft eine Vorrichtung zur Aufnahme und/oder Entnahme flächiger Produkte, insbesondere scheibenförmiger Datenträger, mit einem exzentrisch zu einem gemeinsamen Zentrum der Datenträger beabstandet angeordneten Achskörper sowie einer Anzahl jeweils mit einem Schwenkteil und dazwischen angeordneter Distanzglieder übereinanderliegend an dem Achskörper gelagerter Trägerelemente, welche jeweils um die vertikale Achse des mit dem einen Ende an einem Basiskörper und mit dem anderen Ende an einem in vertikaler Richtung im Abstand dazu angeordneten Abdeckelement gelagerten Achskörpers in horizontaler Ebene schwenkbar sind.

Aus der Veröffentlichung (IBM, Technical Disclosure Bulletin, Bd.26, Nr.3A, August 1983, Seiten 1208-1209) ist eine mit seitlich angeordnetem Traggriff versehene und zur Aufnahme und/oder Entnahme etwa scheibenförmiger Magnetplatten ausgebildete Vorrichtung bekannt. Diese Vorrichtung umfasst im wesentlichen mehrere übereinanderliegend sowie durch Distanzglieder beabstandet an einem Achskörper gelagerte und um dessen vertikale Achse schwenkbare Tragarme für die Magnetplatten sowie zwei Seitenteile, welche an der einen Seite gelenkig und aufschwenkbar miteinander verbunden und an der anderen, kreisbogenförmig ausgebildeten Seite durch entsprechend daran angeordnete Überwurfelemente miteinander verschliessbar sind.

Aus den Druckschriften (DE-U 94 04 005; DE-U 94 12 484) sind weitere Vorrichtungen bekannt, welche mit mehreren übereinanderliegend an einem Achskörper oder Stabelement angeordneten und aufschwenkbar gelagerten Tragarmen zur Aufnahme scheibenförmiger Datenträger (CD's) versehen sind.

Weiterhin ist es allgemein bekannt, scheibenförmig ausgebildete Datenträger (CD's) zur geschützten Aufbewahrung in entsprechend ausgebildeten Kunststoffhüllen oder dergleichen, beispielsweise in einem flachen, kastenförmig ausgebildeten Behälter mit angelenkt aufklappbarem Deckel anzuordnen sowie in einem an sich bekannten Ständerturm (CD-Rack) getrennt übereinander liegend zu lagern. Derartige Ständertürme haben zur Aufnahme von etwa 100 in den Behältern angeordneter Datenträger eine Höhe von 1,8 m bis 2,0 m.

Weiterhin ist es allgemein bekannt, aus wirtschaftlichen Gründen derartige Datenträger (CD's) in sogenannten Einwegverpackungen, wie beispielsweise aus relativ einfach recycelbaren Plastik- oder Kartonhüllen oder dergleichen aufzubewahren beziehungsweise zu vertreiben.

Aufgabe der Erfindung ist es, eine Vorrichtung gemäss dem Oberbegriff des Anspruchs 1 dahingehend zu verbessern, dass mit relativ einfachen konstruktiven Mitteln eine gegen äusseren Eingriff geschützte sowie staubfreie Aufbewahrung sowie ein Herausnehmen der einzelnen Datenträger gewährleistet ist, ohne dass bei der Handhabung die hochempfindliche Oberfläche der herausgeschwenkten beziehungsweise der in der Vorrichtung verbleibenden Datenträger beschädigt werden.

Die Erfindung löst die Aufgabe dadurch, dass die einzelnen Trägerelemente je mit einer zur Auflage des scheibenförmigen Datenträgers ausgebildeten und durch einen am äusseren Umfang angeordneten Steg begrenzten Bodenplatte versehen sowie mittels der einzelnen Schwenkteile relativ zu den dazwischen am Achskörper gegen Verdrehung gesicherten Distanzgliedern in horizontaler Ebene schwenkbar sind, wobei der Achskörper mit dem einen Ende in einem ersten Lagerteil des Basiskörpers und mit dem anderen Ende in einem zweiten Lagerteil des Abdeckelements gelagert und gegen Verdrehung gesichert ist.

Durch die angegebene Massnahme können die Trägerelemente mit und ohne Datenträger (CD's) unabhängig voneinander um den vertikalen Achskörper geschwenkt werden, ohne dass dabei gleichzeitig das direkt beziehungsweise die unmittelbar darüber und/oder darunterliegenden Trägerelement/e aufgeschwenkt werden. Mit der erfindungsgemässen Vorrichtung können unter Berücksichtigung einer verhältnismässig geringen Bauhöhe eine Vielzahl von Datenträgern aufgenommen und gelagert werden. Ein weiterer Vorteil darin besteht, dass das einzelne Trägerelement jeweils um die vertikale Achse des Achskörpers unbegrenzt um einen Winkel von 360° verschwenkt und somit der einzelne Datenträger problemlos eingelegt und/oder entnommen werden kann. Zudem besteht die Möglichkeit, dass gleichzeitig zwei bis drei Trägerelemente in der Ebene versetzt zueinander aufgeschwenkt werden können, ohne dass dabei die Vorrichtung instabil wird.

Im Rahmen der Erfindung hat sich weiterhin herausgestellt, dass ein Ausführungsbeispiel der Vorrichtung zur Aufbewahrung von beispielsweise 100 CD's im Vergleich zu dem an sich bekannten CD-Ständerturm eine wesentlich geringere Bauhöhe von etwa 0,44 m aufweist. Die Grundfläche der erfindungsgemässen Vorrichtung ist dabei nur geringfügig grösser als der Durchmesser des eigentlichen Datenträgers.

Weitere Merkmale und Einzelheiten der Erfindung ergeben sich aus der nachstehenden Beschreibung in Verbindung mit der Zeichnung und den einzelnen Patentansprüchen.

Ausführungsbeispiele der Erfindung werden nachstehend anhand der Zeichnung beschrieben. Es zeigt:
**Fig.1** ein erstes Ausführungsbeispiel einer in räumlicher Ansicht dargestellten Vorrichtung zur mit herausgezogenem Trägerelement Aufnahme und/oder Entnahme scheibenförmiger Datenträger;
**Fig.2** die in Ansicht und teilweise aufgebrochen dargestellte Vorrichtung gemäss Fig.1;
**Fig.3** die in Draufsicht dargestellte Vorrichtung gemäss Fig.2 mit aufgeschwenktem Trägerelement für den Datenträger;
**Fig.4** ein im Schnitt dargestelltes Abdeckelement für die Vorrichtung gemäss Fig.1;
**Fig.5** das in Draufsicht teilweise aufgebrochen und im Schnitt dargestellte Abdeckelement gemäss Fig.4;
**Fig.6** einen im Schnitt dargestellten Basiskörper für die Vorrichtung gemäss Fig.1;
**Fig.7** den in Draufsicht sowie teilweise aufgebrochen und im Schnitt dargestellten Basiskörper gemäss Fig.6;
**Fig.8** das räumlich und zur Aufnahme des Datenträgers ausgebildete sowie mit mindestens einem Griffteil versehene Trägerelement für die Vorrichtung gemäss Fig.1;
**Fig.9** das im Schnitt dargestellte Trägerelement gemäss Fig.8;
**Fig.10** das von unten gemäss Pfeilrichtung Y in Fig.9 dargestellte Trägerelement;
**Fig.11** ein in Fig.2 durch einen Kreis K bezeichnetes und in grösserem Massstab dargestelltes erstes Teilstück eines Abdeckelements für die Vorrichtung gemäss Fig.1;
**Fig.12** ein scheibenförmig ausgebildetes und in Draufsicht dargestelltes Distanzglied für die Vorrichtung gemäss Fig.1;
**Fig.13** ein in Fig.2 durch einen Kreis K' bezeichnetes und in grösserem Massstab dargestelltes zweites Teilstück eines Basiskörpers für die Vorrichtung gemäss Fig.1;
**Fig.14** eine in Draufsicht dargestellte Kunststoffkappe zum Aufschieben auf das Griffteil des Trägerelements gemäss Fig.8 bis Fig.10;
**Fig.14a** die gemäss Pfeilrichtung a-a im Schnitt dargestellte Kunststoffkappe gemäss Fig.14;
**Fig.15** ein von unten dargestelltes Teilstück des als weitere Variante ausgebildeten Trägerelements für die Vorrichtung gemäss Fig.1;
**Fig.16** eine in Draufsicht dargestellte erste Grundplatte mit zwei darauf angeordneten Vorrichtungen gemäss Fig.1 zur Aufnahme und/oder Entnahme scheibenförmiger Datenträger;
**Fig.17** eine in Draufsicht dargestellte zweite Grundplatte mit drei darauf angeordneten Vorrichtungen gemäss Fig.1;
**Fig.18** eine in Draufsicht dargestellte dritte Grundplatte mit vier darauf angeordneten Vorrichtungen gemäss Fig.1; und
**Fig.19** eine in Draufsicht dargestellte vierte Grundplatte mit sechs darauf angeordneten Vorrichtungen gemäss Fig.1.

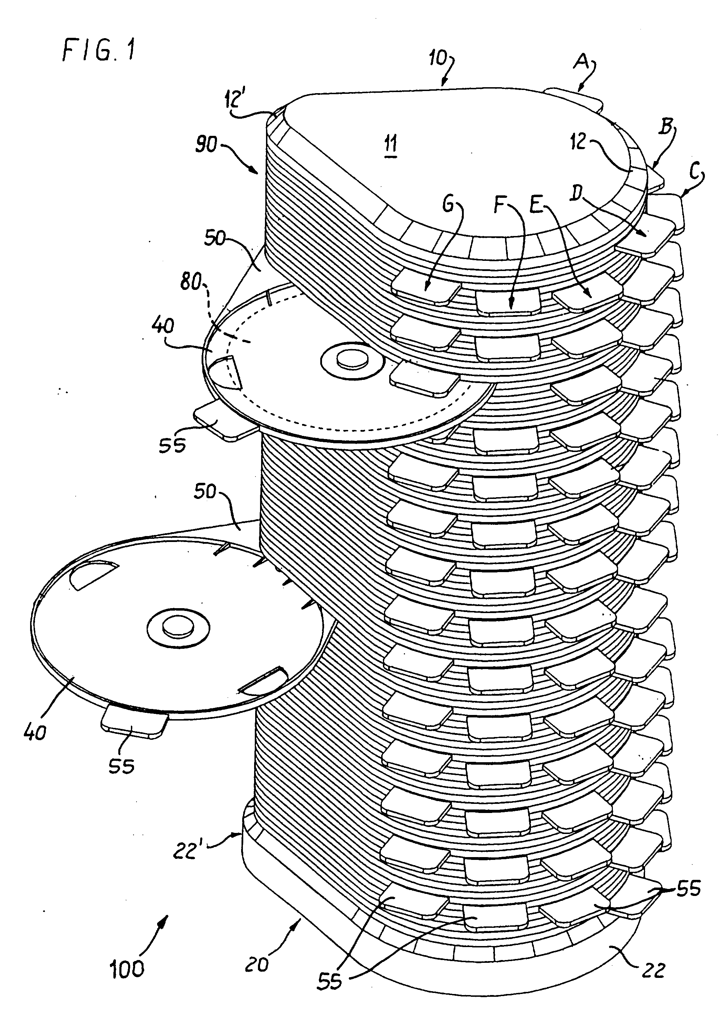

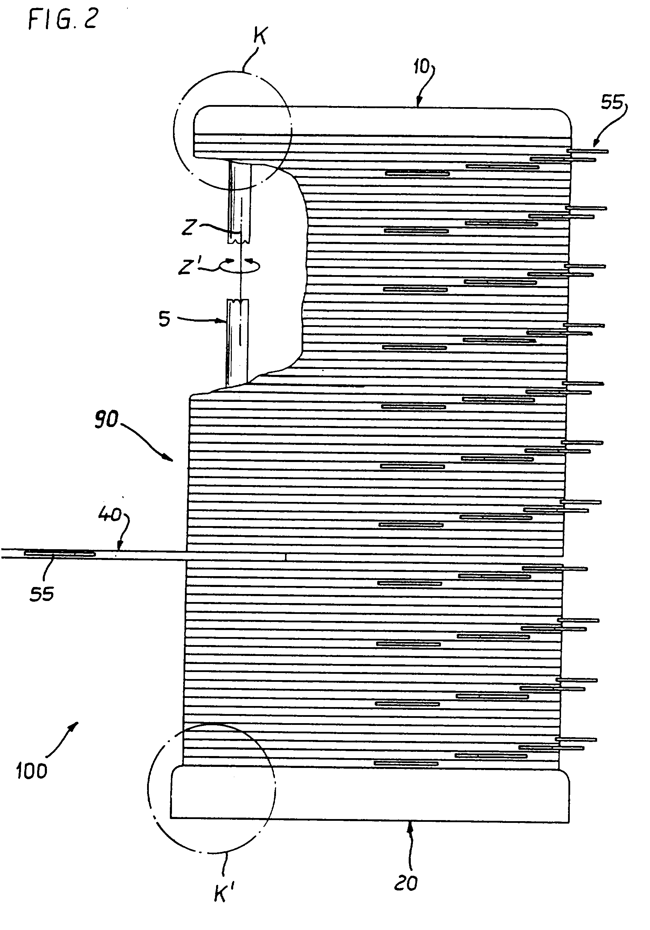

Fig.1 zeigt als erstes Ausführungsbeispiel eine in räumlicher Ansicht dargestellte Vorrichtung 100, welche zur Aufnahme und/oder Entnahme flacher, scheibenförmig ausgebildeter Datenträger 80 ausgebildet ist. Die Vorrichtung 100 umfasst im wesentlichen einen Basiskörper 20 sowie ein in vertikaler Richtung im Abstand dazu angeordnetes Abdeckelement 10. Der Basiskörper 20 sowie das haubenförmig ausgebildete Abdeckelement 10 sind durch einen die Vorrichtung 100 in vertikaler Richtung durchdringenden Achskörper 5 (Fig.2) miteinander verbunden. Zwischen dem Basiskörper 20 und dem Abdeckelement 10 sind an dem Achskörper 5 mehrere Trägerelemente 40 angeordnet, welche jeweils zur Aufnahme und/oder Entnahme eines einzelnen Datenträgers 80 ausgebildet sind. Die je mit einem Griffteil 55 versehenen Trägerelemente 40 können einzeln oder zu mehreren (in Gruppe) relativ zu dem Basiskörper 20 beziehungsweise zu dem Abdeckelement 10 in horizontaler Ebene um eine vertikale Achse Z des Achskörpers 5 in Pfeilrichtung Z' (Fig.2) verschwenkt werden. Die zwischen dem Basiskörper 20 und dem Abdeckelement 10 übereinanderliegend angeordneten Trägerelemente 40 bilden zusammen eine in Fig.1 und Fig.2 in der Gesamtheit mit 90 bezeichnete Gruppe der Trägerelemente 40.

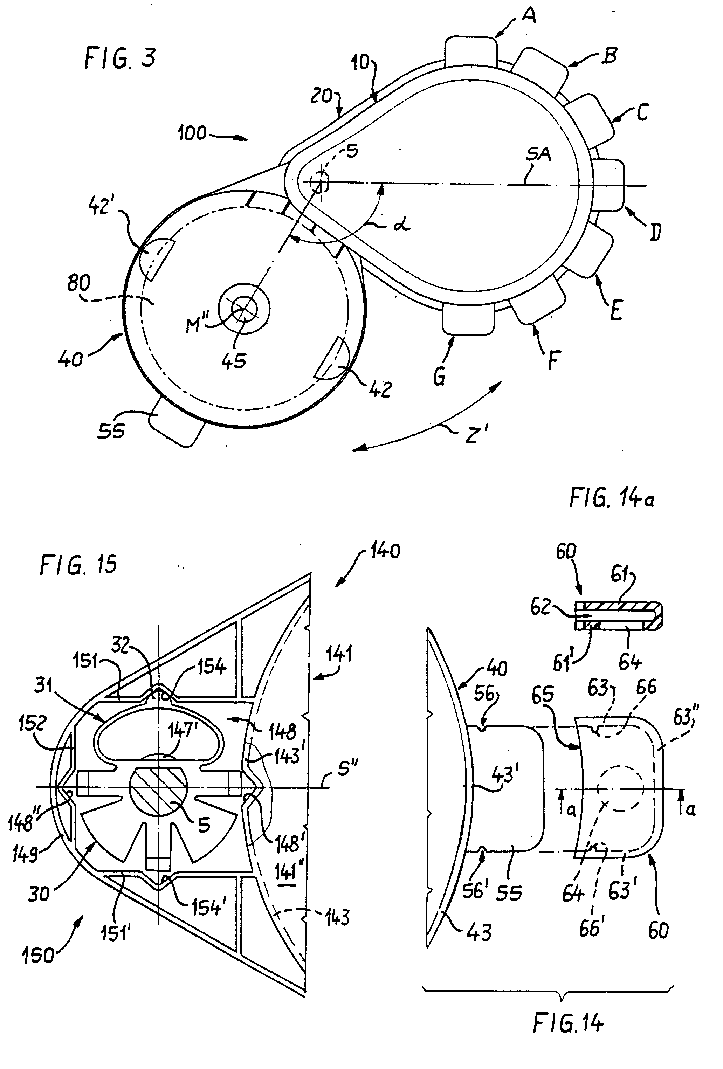

Zur besseren Darstellung der relativ zu der gemeinsamen Symmetrieachse des Abdeckelements 10 und Basiskörpers 20 erreichbaren Schwenkbewegung ist in Fig.1 beispielsweise ein Trägerelement 40 mit eingelegtem und schematisch dargestellten Datenträger 80 einer ersten in teilweise aufgeschwenkten Stellung und ein anderes Trägerelement 40 (ohne Datenträger 80) in einer zweiten weitgehend aufgeschwenktem Stellung dargestellt. Die in Pfeilrichtung Z' um die vertikale Achse Z des Achskörpers 5 orientierte Schwenkbewegung (Fig.2) kann beispielsweise stufenlos oder aber in gerasterten Schritten erfolgen. Bei der Schwenkbewegung mit gerasterten Schritten kann das einzelne Trägerelement 40 in bezug auf eine gemeinsame, gedachte Symmetrieachse mit einem Winkel von 90° schrittweise verschwenkt werden. Durch eine entsprechende Handhabung des Griffteils 55 kann das Trägerelement 40 auch problemlos um die vertikale Achse Z in Pfeilrichtung Z' (Fig.3) in eine gewünschte andere Stellung geschwenkt werden. Die um die vertikale Achse Z des Achskörpers 5 orientierte Schwenkbewegung der einzelnen Trägerelemente 40 können bei der erfindungsgemässen Vorrichtung 100 einen Winkel von 360° betragen, so dass beispielsweise mehrere Trägerelemente 40 zur Aufnahme und/oder Entnahme der Datenträger 80 gleichzeitig in aufgeschwenkter Stellung zugänglich sind.

Wie in Fig.1 weiterhin dargestellt, sind die einzelnen Griffteile 55 versetzt zueinander an den etwa halbkreisbogenförmig ausgebildeten Stirnseiten (nicht bezeichnet) der Trägerelemente 40 angeordnet. Die einzelnen Griffteile 55 bilden dabei jeweils eine in vertikaler Richtung der Vorrichtung 100 orientierte und mit A, B, C, D, E, F und G bezeichnete Griffteil-Gruppe. Durch die versetzte Anordnung der Griffteile 55 an den Stirnseiten der einzelnen Trägerelemente 40 sind die in vertikaler Richtung übereinander liegenden Griffteile 55, wie beispielsweise anhand der in Fig.1 bezeichneten Gruppen D, E, F und G dargestellt, in ausreichend grossen Abständen zueinander angeordnet, wodurch ein ausreichender Abstand zwischen den Griffteilen für eine optimale Handhabung zum Verschwenken des einzelnen Trägerelements 40 gewährleistet ist.

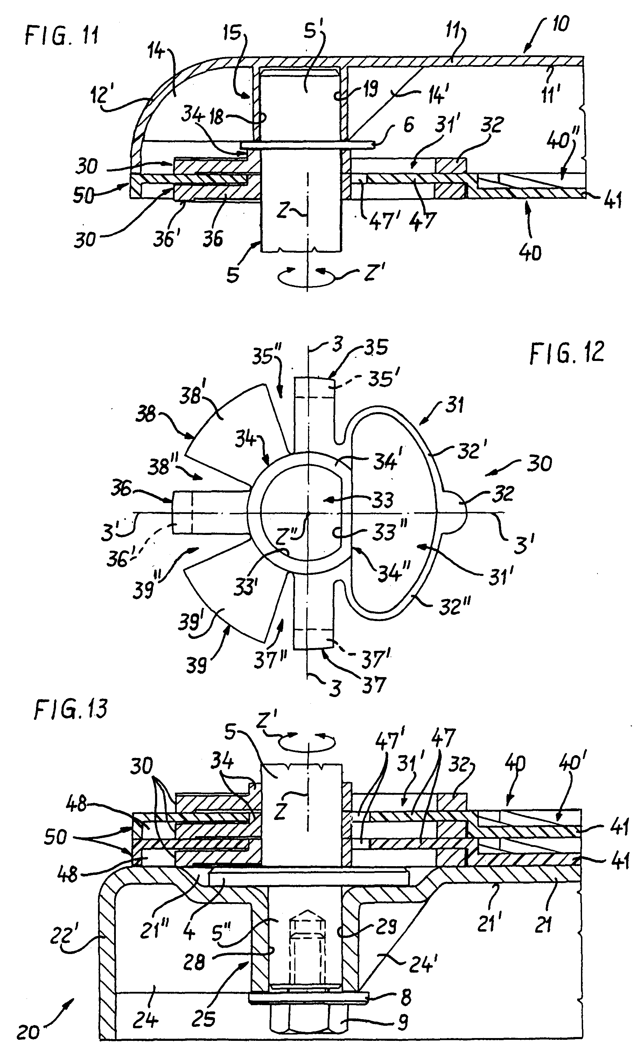

In Fig.2 ist die Vorrichtung 100 in Seitenansicht und teilweise aufgebrochen dargestellt und man erkennt den Basiskörper 20, das in vertikaler Richtung im Abstand dazu angeordnete Abdeckelement 10 sowie den Achskörper 5. Der Achskörper 5 ist einerseits in dem haubenförmig ausgebildeten Abdeckelement 10 und andererseits in dem Basiskörper 20 formschlüssig gegen Verdrehung gesichert gelagert. Weiterhin erkennt man die Trägerelementgruppe 90 mit den in relativ geringen Abständen übereinander liegend angeordneten Trägerelementen 40, welche jeweils um die vertikale Achse Z des feststehenden Achskörpers 5 in horizontaler Ebene in Pfeilrichtung Z' schwenkbar sind (Fig.3). Die durch den Kreis K bezeichnete Lagerung des Achskörpers 5 in dem Abdeckelement 10 und die durch den Kreis K' bezeichnete Lagerung in dem Basiskörper 20 sowie die Lagerung der einzelnen Trägerelemente 40 mit den jeweils dazwischen angeordneten Distanzgliedern 30 an dem Achskörper 5 wird später in Verbindung mit den Figuren 11 und 13 im einzelnen beschrieben.

Fig.3 zeigt die in Draufsicht dargestellte Vorrichtung 100 und man erkennt den Basiskörper 20, das Abdeckelement 10 sowie ein beliebig gewähltes und um die vertikale Achse Z des Achskörpers 5 in Pfeilrichtung Z' aufgeschwenkt dargestelltes Trägerelement 40 mit eingelegtem und schematisch dargestellten Datenträger 80. Weiterhin erkennt man in Fig.3 die stirnseitig an den einzelnen Trägerelementen 40 in Umfangsrichtung verteilt zueinander angeordneten Gruppen A bis G der Griffteile 55. Wie in Fig.3 schematisch dargestellt, kann bei einem auf die Symmetrieachse SA der kompletten Vorrichtung 100 bezogenen Schwenkwinkel α in der Grössenordnung von etwa 120° der Datenträger 80 problemlos von dem Trägerelement 40 entfernt oder auf dem Trägerelement 40 abgelegt werden.

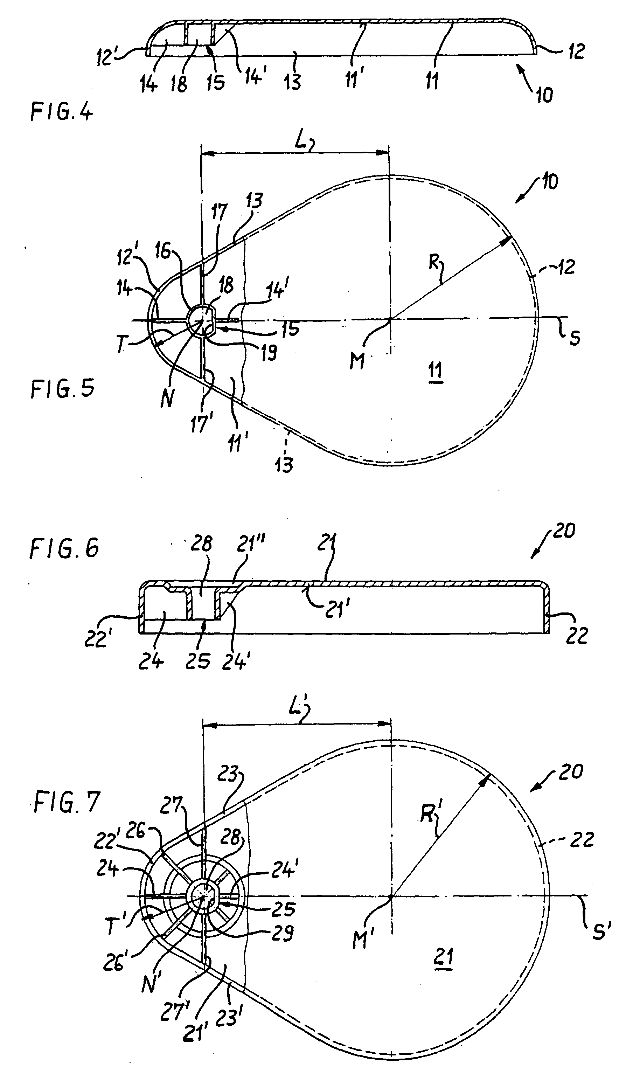

Das in Fig.4 im Schnitt und in Fig.5 in teilweise aufgebrochener Draufsicht dargestellte Abdeckelement 10 hat eine etwa scheibenförmig ausgebildete Bodenplatte 11 sowie eine daran angeformte und in bezug auf die Bodenplatte 11 nach unten orientierte, stegförmige Umrandung 12,12' und 13,13'. Die Bodenplatte 11 ist, wie in Fig.5 dargestellt, an beiden Enden jeweils weitgehend kreisbogenförmig ausgebildet. Das eine Ende ist ausgehend von der auf der Symmetrieachse S der Bodenplatte 11 liegenden ersten Mitte M (Zentrum) mit einem dem Datenträger 80 angepassten ersten Radius R und das andere, gegenüberliegende Ende ausgehend von der ebenfalls auf der Symmetrieachse S liegenden zweiten Mitte N (Zentrum) mit einem zweiten Radius T weitgehend kreisbogenförmig ausgebildet. Die beiden Mitten M und N sind im Abstand L zueinander auf der gedachten Symmetrieachse S angeordnet. Der Abstand L ist dabei vorzugsweise grösser gewählt als der erste Radius R, wodurch die beiden Seitenwände 13,13' ausgehend von der ersten, kreisbogenförmigen Stirnwand 12 in Richtung der zweiten, kreisbogenförmigen Rückwand 12' des Abdeckelements 10 konisch verjüngend ausgebildet sind. An der Innenseite 11' der Bodenplatte 11 ist ein mit einer Ausnehmung 18 versehenes Lagerteil 15 angeformt. Am äusseren Umfang 16 des Lagerteils 15 sind in Umfangsrichtung verteilt angeordnete und mit der Rückwand 12' und den beiden Seitenwänden 13,13' verbundene Versteifungsrippen 14, 14' und 17,17' angeordnet. Die als Sacklochbohrung ausgebildete Ausnehmung 18 ist zur formschlüssigen Anlage des entsprechend ausgebildeten Kopfstücks 5' des Achskörpers 5 (Fig.11) mit einer in axialer Richtung des Lagerteils 15 orientierten Anlagefläche 19 versehen. Im dargestellten Ausführungsbeispiel ist die Anlagefläche 19 quer zur Symmetrieachse S angeordnet.

Der in Fig.6 im Schnitt und in Fig.7 in teilweise aufgebrochener Draufsicht dargestellte Basiskörper 20 hat eine etwa scheibenförmig ausgebildete Bodenplatte 21 sowie eine daran angeformte und in bezug auf die Bodenplatte 21 nach unten orientierte, stegförmige Umrandung 22,22' und 23,23'. Die Bodenplatte 21 ist an beiden Enden etwa kreisbogenförmig ausgebildet, wobei das eine Ende ausgehend von der auf der Symmetrieachse S' der Bodenplatte 21 liegenden ersten Mitte M' (Zentrum) mit einem dem Datenträger 80 angepassten ersten Radius R' und das andere, gegenüberliegende Ende ausgehend von der ebenfalls auf der Symmetrieachse S' liegenden zweiten Mitte N' (Zentrum) mit einem zweiten Radius T' kreisbogenförmig ausgebildet ist. Die beiden Mitten M' und N' sind im Abstand L' zueinander auf der Symmetrieachse S' angeordnet. Der Abstand L' ist dabei vorzugsweise grösser gewählt als der erste Radius R', wodurch die beiden Seitenwände 23,23' ausgehend von der ersten kreisbogenförmigen Stirnwand 22 in Richtung der zweiten kreisbogenförmigen Rückwand 22' des Basiskörpers 20 konisch verjüngend ausgebildet sind. An der Oberseite der Bodenplatte 21 ist eine Vertiefung 21" vorgesehen, welche dem an der Innenseite 21' des Bodens 21 angeordneten und mit einer Durchtrittsöffnung 28 versehene Lagerteil 25 zugeordnet ist. Am äusseren Umfang des Lagerteils 25 sind in Umfangsrichtung verteilt angeordnete und radial nach aussen orientierte Versteifungsrippen 24,24'; 26,26' und 27,27' angeordnet. Die Durchtrittsöffnung 28 ist zur formschlüssigen Anlage des Endstücks 5" des Achskörpers 5 (Fig.13) mit einer in axialer Richtung des Lagerteils 25 orientierten Anlagefläche 29 versehen. Im dargestellten Ausführungsbeispiel ist die Anlagefläche 29 quer zur Symmetrieachse S' angeordnet.

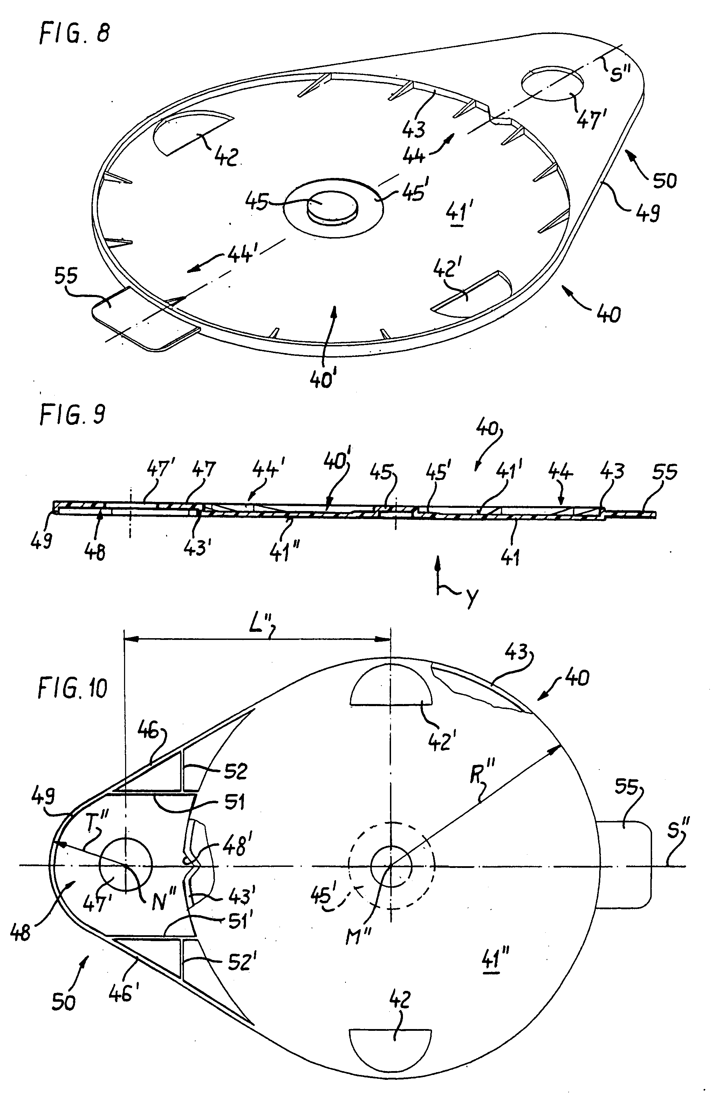

Fig.8 zeigt das räumlich dargestellte und mit einem Griffteil 55 versehene Trägerelement 40, welches mit einer durch eine Bodenplatte 41 sowie einen angeformten, kreisringförmigen Steg 43 gebildeten Vertiefung 40' für den Datenträger 80 (Fig.1) versehen ist. An der Innenfläche 41' der Bodenplatte 41 sind beispielsweise mehrere, im Abstand zueinander angeordnete Rippen 44 und 44' sowie in der mit M" bezeichneten Mitte (Zentrum) der Bodenplatte 41 ein mit einem kreisringförmigen Auflagering 45' versehener Absatz 45 für den mit einer entsprechenden Öffnung (nicht dargestellt) versehenen Datenträger 80 angeordnet. Die Bodenplatte 41 wird weiterhin von zwei etwa quer zur Symmetrieachse S" angeordneten und diametral zueinander im Bereich des äusseren, kreisringförmigen Steges 43 angeordneten Aussparungen 42 und 42' durchdrungen. Die beiden Aussparungen 42,42' sind so ausgebildet und zueinander angeordnet, dass der eingelegte Datenträger 80 durch den beispielsweise in die eine Aussparung 42 eingeführten Daumen sowie durch den in die andere Aussparung 42' eingeführten Mittelfinger der menschlichen Hand (nicht dargestellt) am Aussenrand gehalten aus der Vertiefung 40' des Trägerelements 40 herausgenommen werden kann. Das Trägerelement 40 hat weiterhin ein an der Bodenplatte 41 sowie am Steg 43 angeformtes und auf der Symmetrieachse S" angeordnetes Schwenkteil 50.

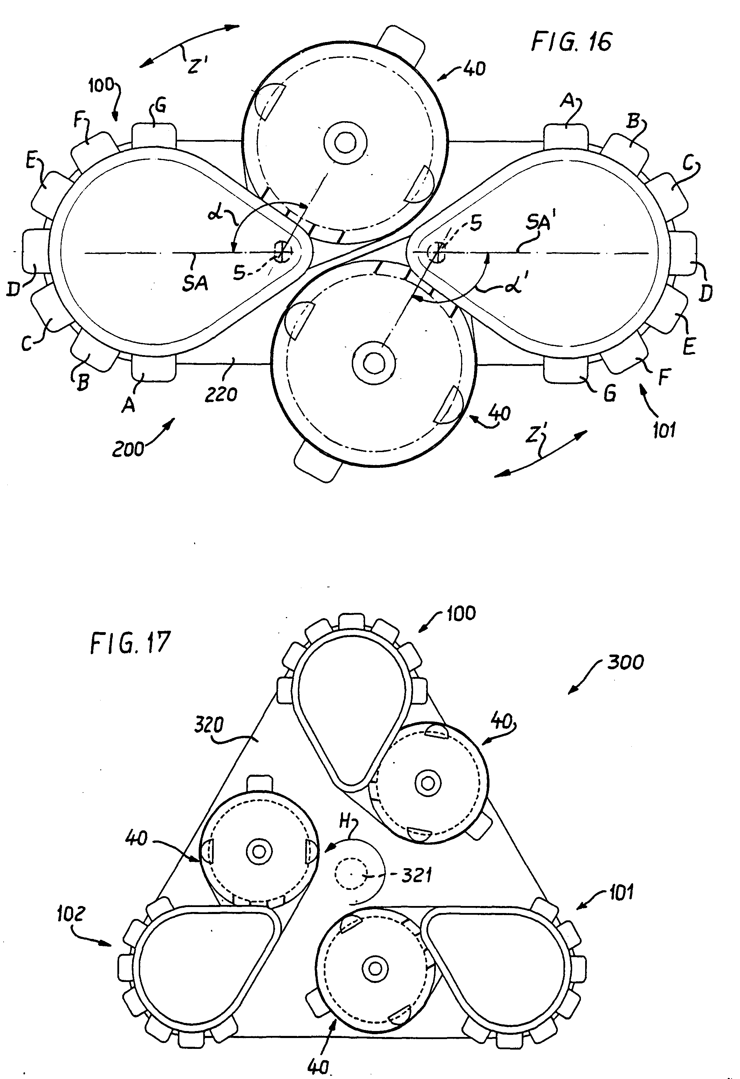

In Fig.9 ist das Trägerelement 40 im Schnitt dargestellt und man erkennt die scheibenförmig ausgebildete Bodenplatte 41, den daran angeformten Steg 43, das Griffteil 55, den Absatz 45 mit der Auflagefläche 45', die gegenüberliegenden und im Abstand zueinander angeordneten Rippen 44 und 44' sowie das angeformte und in bezug auf die Innenfläche 41' der Bodenplatte 41 mit einer abgesetzten Auflageplatte 47 versehene Schwenkteil 50. An der von einer Durchtrittsöffnung 47' durchdrungenen Auflageplatte 47 des Schwenkteils 50 ist ein in bezug dazu nach unten orientierter äusserer Steg 49 angeformt. Das einzelne Trägerelement 40 bzw. 140 gemäss Fig.15 kann an der nicht bezeichneten Oberseite des kreisringförmigen Steges 43 bzw. 143 mit einem in einer zirkulären Nut angeordneten Filzstreifen versehen werden, wodurch das Eindringen von Staubpartikeln in die Vertiefung 40' des Trägerelements 40 bzw. 140 verhindert wird.

Fig.10 zeigt das gemäss Pfeilrichtung Y (Fig.9) von unten dargestellte Trägerelement 40 und man erkennt die etwa kreisbogenförmige Unterseite 41" der Bodenplatte 41 sowie das an dem einen Ende daran angeformte Schwenkteil 50 und am anderen Ende angeformte Griffteil 55. Ausgehend von der auf der Symmetrieachse S" liegenden ersten Mitte M" (Zentrum) ist das eine Ende der Bodenplatte 41 mit einem ersten dem Datenträger 80 angepassten Radius R" und das andere, gegenüberliegende Ende ausgehend von der ebenfalls auf der Symmetrieachse S" liegenden zweiten Mitte N" (Zentrum) mit einem zweiten Radius T" kreisbogenförmig ausgebildet. Die beiden Mitten M" und N" sind im Abstand L" zueinander auf der Symmetrieachse S" angeordnet, wobei der Abstand L" grösser als der erste Radius R" gewählt ist. Das Trägerelement 40 ist in Richtung des kreisbogenförmigen Steges 49 mit den daran angeformten Seitenwänden 46,46' konisch verjüngend ausgebildet.

Im Bereich des mit der Durchtrittsöffnung 47' versehenen Schwenkteils 50 ist eine durch Rippen 51,51' sowie durch den Steg 49 begrenzte Vertiefung 48 (Fig.9) vorgesehen. Die Vertiefung 48 dient zur Aufnahme des scheibenförmigen und gegen Verdrehung am Achskörper 5 gelagerten Distanzgliedes 30, welches später in Verbindung mit Fig.12 im einzelnen beschrieben wird. Weiterhin erkennt man in Fig.10 eine auf der Symmetrieachse S" an der Innenseite 43' des Steges 43 angeordnete Kerbe 48', sowie zwei zwischen den Seitenwänden 46,46' und den Rippen 51,51' quer zur Symmetrieachse S" orientierte Versteifungsrippen 52,52'.

Fig.11 zeigt im Schnitt das in Fig.2 durch einen Kreis K in grösserem Massstab dargestellte Teilstück der Vorrichtung 100 und man erkennt das Abdeckelement 10 mit dem Boden 11 sowie das an der Innenseite 11' des Bodens 11 angeordnete Lagerteil 15. In dem mit der Ausnehmung 18 und der Anlagefläche 19 versehenen Lagerteil 15 ist der Achskörper 5 mit einem entsprechend ausgebildeten Kopfstück 5' gegen Verdrehung formschlüssig gesichert angeordnet und durch einen Sicherungsring 6 (Sprengring) oder dergleichen am Abdeckelement 10 gehalten. Weiterhin erkennt man das zwischen zwei Distanzgliedern 30 angeordnete und mit dem Schwenkteil 50 am Achskörper 5 gelagerte Trägerelement 40 mit der teilweise dargestellten Vertiefung 40' für den hier nicht dargestellten Datenträger 80. Das mit dem Schwenkteil 50 zwischen den beiden Distanzgliedern 30 angeordnete Trägerelement 40 ist relativ zu dem jeweils mit dem Achskörper 5 gegen Verdrehung gesicherten Distanzglied 30 um die vertikale Achse Z des Achskörpers 5 in Pfeilrichtung Z' schwenkbar (Fig.1 bis Fig.3). Das Abdeckelement 10 ist vorzugsweise mit nicht näher dargestellten Mitteln (Schraub- oder Klebverbindung) an dem Kopfstück 5' des Achskörpers 5 befestigt.

In Fig.12 ist das im wesentlichen als ebene Scheibe ausgebildete Distanzglied 30 in Draufsicht dargestellt. Das Distanzglied 30 hat ein im Zentrum Z" der beiden sich kreuzenden Mittelachsen 3-3 und 3'-3' angeordnetes Nabenteil 34, welches ein kreisbogenförmiges Teilstück 34' sowie ein daran angeformtes und in parallelem Abstand zu der einen Mittelachse 3-3 angeordnetes Teilstück 34" aufweist. Das Nabenteil 34 hat eine zur formschlüssigen Anlage dem Profilquerschnitt des Achskörpers 5 (Fig.11) entsprechend angepasste Durchtrittsöffnung 33. Die Durchtrittsöffnung 33 hat ein kreisbogenförmiges Teilstück 33' sowie eine parallel zu der ersten Mittelachse 3-3 angeordnete und inaxialer Richtung der Durchtrittsöffnung 33 orientierte Anlagefläche 33". An dem kreisbogenförmigen Teilstück 34' des Nabenteils 34 sind in Umfangsrichtung durch Aussparungen 35",38",39" und 37" verteilt zueinander angeordnete und etwa segmentförmig ausgebildete erste Arme 35, 36 und 37 sowie zweite Arme 38 und 39 angeordnet. Die mit einem Winkel von 90° in Umfangsrichtung im Abstand zueinander angeordneten ersten Arme 35,36 und 37 sind an der der Auflageplatte 47 des Trägerelements 40 zugewandten Unterseite (Fig.11,13) zur Erreichung einer sogenannten Dreipunktlagerung jeweils mit einem Absatz 35',36',37' versehen. An dem Nabenteil 34 des Distanzgliedes 30 ist an dem parallel zur ersten Mittelebene 3-3 angeordneten Teilstück 34" weiterhin ein Federelement 31 angeordnet. Das Federelement 31 hat mindestens einen an dem Nabenteil 34 angeformten, kreisbogenförmig ausgebildeten und mit einem Rastnocken 32 versehenen Federarm 32' oder 32". Das Federelement 31 ist jedoch, wie in Fig.12 dargestellt, vorzugsweise mit den beiden entsprechend angeformten Federarmen 32',32" versehen.

Die radial nach aussen orientierten ersten Arme 35,36 und 37 sind derart an dem Nabenteil 34 angeordnet, dass in zusammengebautem Zustand der einzelnen Elemente (Fig.11,13) die ersten Arme 35,36 und 37 mit den angeformten Absätzen 35',36' und 37' an der nicht bezeichneten Oberfläche des Schwenkteils 50 gemäss Fig.10 bzw. 150 gemäss Fig.15 aufliegend angeordnet sind. Zwischen den nicht bezeichneten Oberflächen der ersten Arme 35,36 und 37 und der nicht bezeichneten Innenseite der Vertiefung 48 bzw. 148 des Trägerelements 40 (Fig.10) bzw. 140 (Fig.15) ist jeweils ein geringfügiger Spalt (Abstand) vorgesehen.

Die radial nach aussen orientierten zweiten Arme 38 und 39 sind derart an dem Nabenteil 34 angeordnet, dass in zusammengebautem Zustand der einzelnen Elemente (Fig.11,13) das jeweils zugeordnete Trägerelement 40 bzw. 140 mit der nicht bezeichneten Innenseite der Vertiefung 48 bzw. 148 auf der nicht bezeichneten Oberfläche der zweiten Arme 38 und 39 aufliegt.

Das an dem Distanzglied 30 angeformte Federelement 31 mit den beiden Federarmen 32' und 32" und dem Rastnocken 32 ist derart ausgebildet, dass bei der Drehbewegung des jeweiligen Trägerelements 40 der Rastnocken 32 aus der an der Innenseite der Vertiefung 48 (Fig.10) angeordneten Kerbe 48' gedrückt und dabei der Zwischenraum 31' des Federelements 31 gegen die federelastische Rückstellkraft desselben geringfügig verformt und dadurch der Rastnocken 32 freigegeben wird.

An dieser Stelle wird darauf hingewiesen, dass der Achskörper 5 (Fig.11,13) im Profilquerschnitt etwa die Formgebung (Fig.12) der in der Nabe 34 vorgesehenen Durchtrittsöffnung 33 aufweist. Es besteht jedoch auch die Möglichkeit, den Achskörper 5 mit den beiden Endstücken 5' und 5" zur Erreichung einer Form schlüssigen Wirkverbindung im Profilquerschnitt mehrkantig auszubilden. Hierbei ist jedoch die Durchtrittsöffnung 18 im Lagerteil 15 des Abdeckelements 10 (Fig.ll) sowie die Durchtrittsöffnung 28 im Lagerteil 25 des Basiskörpers 20 (Fig.13) und auch die Durchtrittsöffnung 33 im Distanzglied 30 (Fig.12) entsprechend dem Profilquerschnitt des Achskörpers 5 auszubilden.

In Fig.13 ist im Schnitt das in Fig.2 durch einen Kreis K' in grösserem Massstab dargestellte Teilstück der Vorrichtung 100 dargestellt und man erkennt den Basiskörper 20 mit dem Boden 21 sowie das an der Innenseite 21' des Bodens 21 angeordnete Lagerteil 25. In dem Lagerteil 25 ist der Achskörper 5 mit einem entsprechend ausgebildeten Lagerzapfen 5" in der Durchtrittsöffnung 28 angeordnet und durch eine Schraubverbindung (Schraube 9, Scheiben 4 und 8) mit dem Basiskörper 20 fest verbunden. Weiterhin sind in Fig.13 zwei Trägerelemente 40 mit der Vertiefung 40' für den Datenträger 80 (Fig.8) dargestellt. Die einzelnen Trägerelemente 40 sind jeweils mit der Durchtrittsöffnung 47' am Nabenteil 34 des in der Vertiefung 48 angeordneten Distanzgliedes 30 angeordnet und stehen jeweils mit dem Rastnocken 32 desselben in Wirkverbindung. Die einzelnen mit den in der Vertiefung 48 des Schwenkteils 50 angeordneten Distanzgliedern 30 versehenen Trägerelemente 40 sind, wie bereits vorstehend beschrieben, um die vertikale Achse Z des Achskörpers 5 in Pfeilrichtung Z' in horizontaler Ebene schwenkbar (Fig.1 bis Fig.3).

Bei einer nicht näher dargestellten Variante ist der Achskörper 5 im unteren Bereich (Fig.13) derart ausgebildet und in dem Basiskörper 20 angeordnet, dass die einzelnen Trägerelemente 40 (Fig.10) bzw. 140 (Fig.15) mit den in der Vertiefung 48 bzw. 148 der Schwenkteile 50 bzw. 150 angeordneten Distanzgliedern 30 mittels der Schraubverbindung gegeneinander verspannt sind.

Fig.14 zeigt eine in Draufsicht und Fig.14a gemäss der Linie a-a im Schnitt dargestellte Kunststoffkappe 60 zum Aufschieben auf das an dem einzelnen Trägerelement 40 angeordnete Griffteil 55. Die im Profilquerschnitt etwa c-förmig ausgebildete Kunststoffkappe 60 hat einen zwischen einer oberen Wand 61 und einer unteren Wand 61' angeordneten und durch Seitenwände 63,63' sowie eine Rückwand 63" gebildeten Hohlraum 62. Der Hohlraum 62 ist in seinen Abmessungen entsprechend dem am Trägerelement 40 (Fig.10) bzw. 140 (Fig.15) angeordneten Griffteil 55 ausgebildet. An der nicht näher bezeichneten Innenseite der beiden Seitenwände 63,63 ist jeweils ein Rastnocken 66,66' angeformt, welche in aufgeschobenem Zustand der Kunstoffkappe 60 in entsprechend am Griffteil 55 vorgesehenen Kerben 56,56' einrasten. Die der Rückwand 63" gegenüberliegende Stirnseite 65 ist weitgehend der äusseren Formgebung des Trägerelements 40 kreisbogenförmig ausgebildet. In aufgeschobenem Zustand ist die vorzugsweise aus transparentem Kunststoff oder dergleichen hergestellte Kappe 60 an der äusseren Kontur 43' des Trägerelements 40 anliegend angeordnet. Aus fertigungstechnischen Gründen sowie zur besseren Handhabung des Griffteils 55 ist die Kappe 60 an der unteren Wand 61' vorzugsweise mit einer beliebig ausgebildeten Ausnehmung 64 versehen.

An dieser Stelle sei darauf hingewiesen, dass das an dem jeweiligen Trägerelement 40 angeordnete Griffteil 55 entweder fest angeformt oder in nicht näher dargestellter Weise in Umfangsrichtung an der kreisförmigen Stegkontur 43' des Trägerelements 40 verschiebbar ist. Die Schiebebewegung des Griffteils 55 kann beispielsweise gleichmässig oder in gerasterten Schritten erfolgen, so dass die einzelnen Griffteile 55 in Abhängigkeit der bereits erwähnten Gruppen A bis G an dem äusseren Steg 43 angeordnet werden können. Weiterhin besteht die Möglichkeit, die Griffteile 55 steckbar an der äusseren, kreisförmigen Stegkontur 43' (Fig.14) des Trägerelements 40 anzuordnen. Die Griffteile 55 an dem Trägerelement 140 können entsprechend analog angeordnet werden.

Die einzelnen Griffteile dienen zur Auflage entsprechend Titel- oder Nummerabhängig beschrifteter Papierplättchen (nicht dargestellt), welche durch die aufschiebbare Kappe 60 an dem jeweiligen Griffteil 55 auswechselbar angeordnet sind.

Die einzelnen übereinanderliegend angeordneten und aus geeignetem Kunststoff im Spritzverfahren hergestellten Trägerelemente 40 bzw. 140 sind vorzugsweise zur besseren Unterscheidung gruppenweise farbig unterschiedlich ausgebildet und können in Abhängigkeit der Farben und zur Kennzeichnung entsprechend gruppenweise übereinanderliegend angeordnet werden.

In Fig.15 ist als weitere Ausführungsvariante ein von unten dargestelltes Teilstück eines Trägerelements 140 dargestellt, bei welchem im wesentlichen das angeformte Schwenkteil 150 von dem in Fig.10 dargestellten Schwenkteil 50 des Trägerelements 40 abweichend ausgebildet ist. Bei der in Fig.15 dargestellten Ausführungsvariante ist an der nicht näher bezeichneten Unterseite des Trägerelements 140 im Bereich des mit der teilweise dargestellten Durchtrittsöffnung 147' versehenen Schwenkteils 150 eine durch Rippen 151,151' und 152 sowie durch einen kreisbogenförmigen Steg 149 begrenzte Vertiefung 148 vorgesehen. In der Vertiefung 148 ist das an dem Achskörper 5 gegen Verdrehung gesicherte Distanzglied 30 angeordnet. Abweichend von dem Schwenkteil 50 gemäss Fig.10, sind bei der Variante gemäss Fig.15 zwei diametral auf der Symmetrieachse S" gegenüberliegend angeordnete erste Kerben 148' und 148" sowie zwei weitere, um einen Winkel von 90° versetzt dazu angeordnete zweite Kerben 154 und 154' vorgesehen. Bei der in Fig.15 dargestellten Ausführungsvariante des Trägerelements 140 besteht die Möglichkeit, dass das um die senkrechte Achse Z des in Fig. 15 im Profilquerschnitt dargestellten Achskörpers 5 schwenkbare Trägerelement 140 in den jeweiligen Stellungen um einen Winkel von 90° eingerastet an dem Nocken 32 des Distanzgliedes 30 arretierbar ist. Die in horizontaler Ebene orientierte Schwenkbewegung des einzelnen Trägerelements 140 erfolgt relativ zu dem gegen Verdrehung am Achskörper 5 angeordneten Distanzglied 30. Bei der Schwenkbewegung wird der am Federelement 31 des Distanzgliedes 30 angeformte Nocken 32 gegen die federelastische Rückstellkraft des Federelements 31 aus der jeweiligen Kerbe 154 herausgedrückt und kann bei entsprechender Schwenkbewegung stellungsabhängig in eine der Kerben 148' oder 148" beziehungsweise 154' einrasten.

In Fig.16 ist eine in Draufsicht dargestellte und in der Gesamtheit mit 200 bezeichnete erste Anordnung zur Aufnahme und/oder Entnahme scheibenförmiger Datenträger mit zwei auf einer ersten schematisch dargestellten Grundplatte 220 angeordneten Vorrichtungen 100 und 101 dargestellt. Die beiden Vorrichtungen 100,101 haben je eine Anzahl vertikal übereinanderliegend angeordnete und um die vertikale Achse des Achskörpers 5 in Pfeilrichtung Z' schwenkbare Trägerelemente 40 oder 140. Abweichend von dem in den Figuren 1 bis 3 dargestellten Basiskörper 20 sind bei dieser Variante an der Trägerplatte 220 zwei im Abstand zueinander angeordnete und nicht näher dargestellte Befestigungs- und Lagerstellen für die Vorrichtungen 100 und 101 vorgesehen. Eine vergleichbare und an der Grundplatte 220 anzuordnende Befestigungs- und Lagerstelle für die am Achskörper 5 angeordneten Trägerelemente 40 wurde vorstehend in Verbindung mit Fig.13 im einzelnen beschrieben. Bei der Anordnung 200 gemäss Fig.16 kann das einzelne Trägerelement 40 der Vorrichtung 100 und 101 um einen Winkel α bzw. α' verschwenkt werden. Der auf die Symmetrieachse SA bzw. SA' der Vorrichtungen 100 und 101 bezogene Winkel α bzw. α' liegt jeweils etwa in der Grössenordnung von 120°.

In Fig.17 ist eine in Draufsicht dargestellte und in der Gesamtheit mit 300 bezeichnete zweite Anordnung zur Aufnahme und/oder Entnahme scheibenförmiger Datenträger dargestellt. Bei dieser Anordnung 300 sind auf einer zweiten schematisch dargestellten und etwa in Form eines Dreiecks ausgebildeten Grundplatte 320 drei im Abstand zueinander angeordnete und jeweils mit aufgeschwenkten Trägerelementen 40 dargestellte Vorrichtungen 100, 101 und 102 angeordnet und befestigt. Abweichend von der in Figur 16 dargestellten Anordnung 200 ist bei dieser Variante die Grundplatte 320 mit drei im Abstand zueinander angeordneten Befestigungs- und Lagerstellen für die Vorrichtungen 100,101 und 102 versehen. Ein bevorzugtes Ausführungsbeispiel der Befestigungs- und Lagerstellen für die am Achskörper 5 angeordneten Trägerelemente 40 wurde vorstehend in Verbindung mit Fig.13 im einzelnen beschrieben. Bei diesem Ausführungsbeispiel besteht weiterhin die Möglichkeit, die Grundplatte 320 derart auszubilden und auf einem nicht näher dargestellten Teller oder dergleichen zu lagern, dass die Grundplatte 320 zusammen mit den darauf angeordneten Vorrichtungen 100,101 und 102 zur besseren Bedienung derselben um die Achse einer schematisch dargestellten Standsäule 321 in horizontaler Ebene in Pfeilrichtung H drehbar ist.

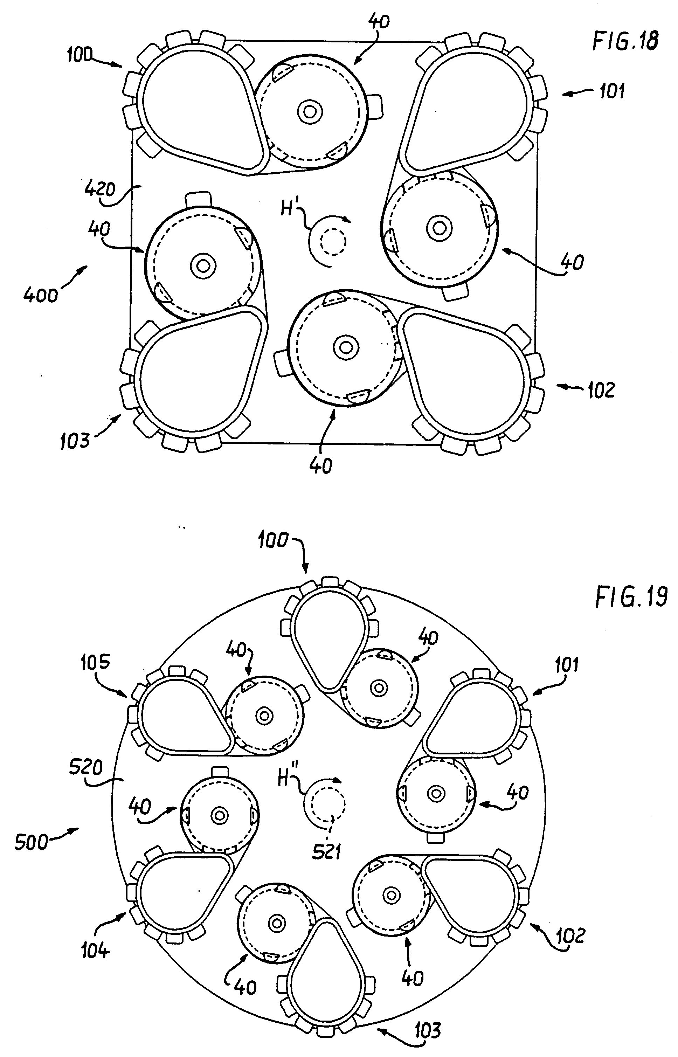

In Fig.18 ist eine in Draufsicht dargestellte und in der Gesamtheit mit 400 bezeichnete dritte Anordnung zur Aufnahme und/oder Entnahme scheibenförmiger Datenträger mit vier auf einer dritten schematisch dargestellten und in Form einer quadratisch ausgebildeten Grundplatte 420 angeordneten Vorrichtungen 100,101,102 und 103, bei welchen jeweils ein Trägerelement 40 in aufgeschwenkter Stellung dargestellt ist. Abweichend von der in Figur 17 dargestellten Anordnung 300 ist bei dieser Variante die Grundplatte 420 mit vier im Abstand zueinander angeordneten Befestigungs- und Lagerstellen für die Vorrichtungen 100,101,102 und 103 versehen, wobei auch hierfür ein bevorzugtes Ausführungsbeispiel der Befestigungsund Lagerstelle für die am Achskörper 5 angeordneten Trägerelemente 40 vorstehend in Verbindung mit Fig.13 im einzelnen beschrieben worden ist. Bei diesem Ausführungsbeispiel besteht weiterhin die Möglichkeit, die Grundplatte 420 derart auszubilden, dass dieselbe zur besseren Bedienung der einzelnen darauf angeordneten Vorrichtungen 100,101,102 und 103 zusätzlich um einen schematisch dargestellten Achskörper 421 einer nicht dargestellten Standsäule in horizontaler Ebene in Pfeilrichtung H' drehbar ist.

Fig.19 zeigt eine weitere, in Draufsicht dargestellte und in der Gesamtheit mit 500 bezeichnete Anordnung zur Aufnahme und/oder Entnahme scheibenförmiger Datenträger mit mehreren auf einer vierten schematisch dargestellten und kreisförmig ausgebildeten Grundplatte 520 angeordneten und jeweils mit aufgeschwenktem Trägerelement 40 dargestellte Vorrichtungen 100; 101;102;103;104 und 105. Abweichend von der in Figur 18 dargestellten Anordnung 400 ist bei dieser Variante die Grundplatte 520 mit sechs in Umfangsrichtung im Abstand zueinander angeordneten Befestigungs- und Lagerstellen für die Vorrichtungen 100;101;102;103;104 und 105 versehen, wobei ein bevorzugtes Ausführungsbeispiel der Befestigungs- und Lagerstelle für die am Achskörper 5 angeordneten Trägerelemente 40 vorstehend in Verbindung mit Fig.13 im einzelnen beschrieben worden ist. Bei diesem Ausführungsbeispiel besteht ebenfalls die Möglichkeit, die Grundplatte 520 derart auszubilden, dass dieselbe zur besseren Bedienung der einzelnen darauf angeordneten Vorrichtungen 100;101;102;103;104 und 105 zusätzlich um einen schematisch dargestellten Achskörper 521 einer nicht dargestellten Standsäule in horizontaler Ebene in Pfeilrichtung H" drehbar ist.

An dieser Stelle wird darauf hingewiesen, dass bei den vorstehend in Verbindung mit den Figuren 16 bis 19 beschriebenen Anordnung 200;300;400 und 500 die einzelnen Vorrichtungen 100 bis 105 analog ausgebildet sind. Die einzelnen Vorrichtungen 100 bis 105 können dabei mit an dem jeweiligen Basiskörper 20 angeordneten Befestigungsmittel (nicht dargestellt) an der jeweiligen Grundplatte 220;320;420 und 520 befestigt werden. Bei einem bevorzugten, nicht dargestellten Ausführungsbeispiel ist die einzelne Vorrichtung 100 bis 105 durch mehrere am Basiskörper 20 angeordnete und federelastisch wirkende Schnappelemente an der jeweiligen Grundplatte befestigt. Der Abstand der einzelnen Vorrichtungen an der jeweiligen Grundplatte kann dabei so gewählt werden, dass die einzelnen Trägerelemente 40 für die Datenträger 80 um die jeweilige vertikale Achse Z des Achskörpers 5 (Fig.3 und 16) mindestens mit einem Winkel α in der Grössenordnung von 120°, vorzugsweise jedoch mit einem Winkel von 360° in horizontaler Ebene schwenkbar sind.

## Patentansprüche

1. Vorrichtung zur Aufnahme und/oder Entnahme flächiger Produkte, insbesondere scheibenförmiger Datenträger, mit einem exzentrisch zu einem gemeinsamen Zentrum (M) der Datenträger (80) beabstandet angeordneten Achskörper (5) sowie einer Anzahl jeweils mit einem Schwenkteil (50;150) und dazwischen angeordneter Distanzglieder (30) übereinanderliegend an dem Achskörper (5) gelagerter Trägerelemente (40;140), welche jeweils um die vertikale Achse (Z) des mit dem einen Ende an einem Basiskörper (20) und mit dem anderen Ende an einem in vertikaler Richtung im Abstand dazu angeordneten Abdeckelement (10) gelagerten Achskörpers (5) in horizontaler Ebene schwenkbar sind, **dadurch gekennzeichnet**, dass die einzelnen Trägerelemente (40;140) je mit einer zur Auflage des scheibenförmigen Datenträgers (80) ausgebildeten und durch einen am äusseren Umfang angeordneten Steg (43;143) begrenzten Bodenplatte (41;141) versehen sowie mittels der einzelnen Schwenkteile (50;150) relativ zu den dazwischen am Achskörper (5) gegen Verdrehung gesicherten Distanzgliedern (30) in horizontaler Ebene schwenkbar sind, wobei der Achskörper (5) mit dem einen Ende in einem ersten Lagerteil (25) des Basiskörpers (20) und mit dem anderen Ende in einem zweiten Lagerteil (15) des Abdeckelements (10) gelagert und gegen Verdrehung gesichert ist.

2. Vorrichtung nach Anspruch 1, **dadurch gekennzeichnet**, dass die an dem Achskörper (5) um dessen vertikale Achse (Z) schwenkbaren Trägerelemente (40;140) einzeln oder in Gruppen entweder stufenlos oder in gerasterten Schritten mit einem in Umfangsrichtung orientierten Winkel von 360° relativ zu dem Basiskörper (20) beziehungsweise zu dem Abdeckelement (10) in horizontaler Ebene schwenkbar sind.

3. Vorrichtung nach den Ansprüchen 1 und 2, **dadurch gekennzeichnet**, dass das einzelne Distanzglied (30) derart mit den zugeordneten Schwenkteilen (50;150) der Trägerelemente (40;140) wirkverbunden ist, dass diese einzeln oder in Gruppen in gerasterten Schritten, beispielsweise in Schritten mit einem Winkel von 90° in horizontaler Ebene relativ zueinander schwenkbar sind.

4. Vorrichtung nach Anspruch 1, **dadurch gekennzeichnet**, dass das einzelne Trägerelement (40;140) an seiner Oberseite mit einer durch die Bodenplatte (41;141) begrenzten ersten Vertiefung (40') für den Datenträger (80) und an der gegenüberliegenden Unterseite im Bereich des Schwenkteils (50;150) mit einer durch eine Auflageplatte (47) desselben begrenzte zweite Vertiefung (48;148) für das scheibenförmige Distanzglied (30) versehen ist.

5. Vorrichtung nach einem der Ansprüchen 1 bis 4, **dadurch gekennzeichnet**, dass das einzelne Distanzglied (30) einen Rasternocken (32) aufweist, welcher bei der in horizontaler Ebene orientierten Schwenkbewegung des einzelnen Trägerelements (40;140) mit mindestens einer im Bereich des Schwenkteils (50;150) an der Innenseite der zweiten Vertiefung (48;148) angeordneten Kerbe (48';148') in Eingriff bringbar ist.

6. Vorrichtung nach Anspruch 5, **dadurch gekennzeichnet**, dass zum Einrasten des an dem Distanzglied (30) angeordneten Rasternockens (32) mehrere an der Innenseite der zweiten Vertiefung (148) des Schwenkteils (150) in bezug auf die Symmetrieachse (S") desselben unter einem Winkel von 90° versetzt zueinander angeordnete Kerben (148',148";154,154') vorgesehen sind.

7. Vorrichtung nach den Ansprüchen 1 und 5, **dadurch gekennzeichnet**, dass das scheibenförmige Distanzglied (30) mit einem Nabenteil (34) formschlüssig gegen Verdrehung gesichert an dem Achskörper (5) angeordnet ist, und dass das Nabenteil (34) an der einen Seite ein bogenförmiges und mit dem Rasternocken (32) versehenes Federelement (31) aufweist und an der gegenüberliegenden Seite mit in Umfangsrichtung verteilten sowie durch Aussparungen (35",38",39",37") im Abstand zueinander angeordneten ersten und zweiten Kontaktarmen (35-39) versehen ist.

8. Vorrichtung nach Anspruch 7, **dadurch gekennzeichnet**, dass das mit dem Rasternocken (32) versehene Federelement (31) als einteiliges, etwa kreisbogenförmig ausgebildetes Segmentteil an dem Nabenteil (34) des Distanzgliedes (30) angeformt ist.

9. Vorrichtung nach den Ansprüchen 7 und 8, **dadurch gekennzeichnet**, dass die ersten Kontaktarme (35,36,37) des Distanzgliedes (30) mit einem Winkel von 90° versetzt zueinander an dem Nabenteil (34) angeformt und die Kontaktarme (35,35,37) an der der Auflageplatte (47) des Schwenkteils (50;150) zugewandten Seite mit einem zur Erreichung einer gleichmässig in Umfangsrichtung verteilten Auflage an dem zugeordneten Trägerelement (40;140) ausgebildeten Absatz (35',36',37') versehen sind.

10. Vorrichtung nach Anspruch 7, **dadurch gekennzeichnet**, dass die zwischen den ersten Kontaktarmen (35,36,37) angeordneten zweiten Kontaktarme (38,39) derart an dem Nabenteil (34) des Distanzgliedes (30) angeordnet sind, dass das jeweils zugeordnete Trägerelement (40;140) mit dem Schwenkteil (50;150) an der Oberfläche (38',39') der zweiten Kontaktarme (38,39) abgestützt ist.

11. Vorrichtung nach Anspruch 1, **dadurch gekennzeichnet**, dass das einzelne Trägerelement (40;140) mit mindestens einem am äusseren Umfang der kreisbogenförmigen Stirnwand (43) angeordneten Griffteil (55) versehen ist, welches entlang der kreisbogenförmigen Stirnwand (43) stufenlos beziehungsweise schrittweise einrastend verschiebbar ist.

12. Vorrichtung nach Anspruch 1, **dadurch gekennzeichnet**, dass der Basiskörper (20) mit dem Abdeckelement (10) und den übereinanderliegend an dem Achskörper (5) in horizontaler Ebene schwenkbar gelagerten Trägerelementen (40;140) sowie den dazwischen angeordneten Distanzgliedern (30) als eine Baueinheit (100) ausgebildet sind.

13. Vorrichtung nach einem der Ansprüche 1 bis 12, **gekennzeichnet durch** eine Grundplatte (220;320;420;520) zur Aufnahme und Befestigung von zwei oder mehreren jeweils mit den einzelnen Elementen (10,20,30,40;140) versehenen Baueinheiten (100 und 101;100 bis 102;100 bis 103;100 bis 105), welche derart beabstandet zueinander auf der Grundplatte (220;320; 420;520) angeordnet sind, dass die einzelnen Trägerelemente (40;140) zur Aufnahme und/oder Entnahme der Datenträger (80) getrennt und unabhängig voneinander um die jeweilige vertikale Achse (Z) des Achskörpers (5) in horizontaler Ebene schwenkbar sind.

14. Vorrichtung nach Anspruch 13, **dadurch gekennzeichnet**, dass die Grundplatte (220;320;420;520) zur Aufnahme und Befestigung der einzelnen im Abstand zueinander angeordneten Baueinheiten (100 und 101;100 bis 102;100 bis 103;100 bis 105) jeweils als eine rechteckige, dreieckige, quadratische oder kreisförmige ebene Platte ausgebildet ist.

15. Vorrichtung nach den Ansprüchen 13 und 14, **dadurch gekennzeichnet**, dass die auf der Grundplatte (320;420;520) an geordneten Baueinheiten (100-102;100-103;100-105) zusätzlich zu der in horizontaler Ebene orientierten Schwenkbewegung der einzelnen Trägerelemente (40;140) jeweils um eine an der Grundplatte (320;420;520) angeordnete und in vertikaler Richtung orientierte Standsäule (321;421;521) in horizotaler Ebene drehbar sind.

## Claims

1. A device for the receipt and/or extraction of flat products, especially disc-shaped data carriers, including an axial body (5) disposed eccentrically of and spaced from a common central point (M) of the data carriers (80), and also including a number of support elements (40; 140), which are mounted one above the other on the axial body (5) by means of respective pivotal sections (50; 150) having spacer members (30) therebetween and each of which is pivotal in a horizontal plane about the vertical axis (Z) of the axial body (5) whose one end is mounted on a base body (20) and whose other end is mounted on a cover element (10) spaced vertically above said base body, characterised in that the individual support elements (40: 140) are each provided with a base plate (41; 141) which serves as a support surface for a disc-like data carrier (80) and is bounded at its outer periphery by a ridge (43; 143), and in that said individual support elements are pivotal by means of their individual pivotal sections (50; 150) in a horizontal plane relative to the intermediate spacer members (30) which are secured against rotation on the axial body (5), whereby said axial body (5) is mounted and secured against rotation in a first mounting part (25) of the base body (20) at one end and in a second mounting part (15) of the cover element (10) at the other end.

2. A device in accordance with Claim 1, characterised in that the support elements (40; 140) pivotal in horizontal planes about the vertical axis (Z) of the axial body (5) are pivotal individually or in groups and either continuously or in measured steps through a peripherally oriented angle of 360° relative to the base body (20) or the cover element (10).

3. A device in accordance with Claims 1 and 2, characterised in that each individual spacer member (30) is effectively coupled to the associated pivotal sections (50; 150) of the support elements (40; 140) in such a manner that these elements are pivotal in horizontal planes relative to one another, either individually or in groups, in measured steps, for example, in steps having an angle of 90°.

4. A device in accordance with Claim 1, characterised in that the upper surface of the individual support element (40; 140) is provided with a first depression (40') for the data carrier (80) which is bounded by the base plate (41; 141) and in that the opposite lower surface of the individual support element is provided with a second depression (48; 148) for the disc-like spacer member (30) in the vicinity of the pivotal section (50; 150) which depression is bounded by a bed plate (47) thereof.

5. A device in accordance with any of the Claims 1 to 4, characterised in that the individual spacer member (30) incorporates a latching cam (32) which is adapted to be brought into engagement with at least one indent (48'; 148') disposed on the inner surface of the second depression (48; 148) in the vicinity of the pivotal section (50; 150) by virtue of the pivotal motion of the individual support element (40; 140) in the horizontal plane.

6. A device in accordance with Claim 5, characterised in that, for the purposes of engagement with the latching cam (32) disposed on the spacer member (30), there are provided a plurality of indents (148', 148''; 154, 154') which are disposed on the inner surface of the second depression (148) of the pivotal section (150) and mutually displaced by an angle of 90° taken with respect to the axis of symmetry (S") of said pivotal section.

7. A device in accordance with Claims 1 and 5, characterised in that the disc-like spacer member (30) is secured against rotation on the axial body (5) by means of a snug-fitting hub part (34), and in that the hub part (34) comprises a bowed spring element (31) incorporating the latching cam (32) at the one side thereof and is provided with first and second contact arms (35 - 39) at the opposite side thereof, said arms being peripherally distributed and mutually spaced by means of recesses (35", 38", 39", 37").

8. A device.in accordance with Claim 7, characterised in that the spring element (31) incorporating the latching cam (32) is in the form of a one-part, approximately circular-arc shaped segment portion formed on the hub part (34) of the spacer member (30).

9. A device in accordance with Claims 7 and 8, characterised in that the first contact arms (35, 36, 37) of the spacer member (30) are mutually displaced on the hub part (34) by an angle of 90°, and in that the contact arms (35, 35 [sic], 37) on the side facing the bed plate (47) of the pivotal section (50; 150) are provided with a shoulder (35', 36', 37') for the purposes of attaining a uniform, peripherally distributed support arrangement on the associated support element (40; 140).

10. A device in accordance with Claim 7, characterised in that the second contact arms (38, 39) arranged between the first contact arms (35, 36, 37) are disposed on the hub part (34) of the spacer member (30) in such a manner that the respectively associated support element (40; 140) is supported on the surfaces (38', 39') of the second contact arms (38, 39) by the pivotal section (50; 150).

11. A device in accordance with Claim 1, characterised in that the individual support element (40; 140) is provided with at least one grip portion (55) which is arranged at the outer periphery of the circular-arc shaped end wall (43) and is displaceable in latching manner along the circular-arc shaped end wall (43) in continuous or step-like manner.

12. A device in accordance with Claim 1, characterised in that the base body (20) together with the cover element (10) and the support elements (40; 140) mounted one above the other on the axial body (5) such as to be pivotal in horizontal planes and also the spacer members (30) located therebetween are formed as a modular unit (100).

13. A device in accordance with any of the Claims to 12, characterised by a sole plate (220; 320; 420; 520) for supporting and fixing two or more modular units (100 and 101; 100 to 102; 100 to 103; 100 to 105) which are provided with the individual elements (10, 20, 30, 40; 140) and are mutually spaced on the sole plate (220; 320; 420; 520) in such a manner that the individual support elements (40; 140) for the receipt and/or extraction of the data carriers (8) are separately and mutually independently pivotal in horizontal planes about the respective vertical axis (Z) of their axial body (5).

14. A device in accordance with Claim 13, characterised in that the sole plate (220; 320; 420; 520) for supporting and fixing the individual, mutually spaced modular units (100 and 101; 100 to 102; 100 to 103; 100 to 105) is in the form of a rectangular, triangular, square or circular flat plate.

15. A device in accordance with Claims 13 and 14, characterised in that, in addition to the pivotal movements oriented in horizontal planes of the individual support elements (40; 140), the modular units (100 - 102; 100 - 103; 100 - 105) arranged on the sole plate (320; 420; 520) are also rotatable in horizontal planes about an upright pillar (321; 421; 521) vertically disposed on the sole plate (320; 420; 520).

## Revendications

1. Dispositif destiné à accueillir et/ou à retirer des éléments plats, notamment des supports de données en forme de disques, muni d'un élément axial (5) disposé de façon excentrée et à une certaine distance par rapport au centre commun (M) des supports de données (80), ainsi que d'un certain nombre d'éléments de support (40;140), superposés les uns aux autres sur l'élément axial (5), avec chacun une pièce pivotante (50;150) et des éléments d'écartement intercalés, ces éléments de support (40;14Q) pouvant chacun pivoter, sur un plan horizontal, autour de l'axe vertical (Z) de l'élément axial (5), fixé, à une extrémité, à un socle (20) et, à l'autre extrémité, à un couvercle (10) placé à une certaine distance de celui-ci en direction verticale, **caractérisé en ce que** les différents éléments de support (40;140) sont chacun munis d'une plaque de fond (41;141) conçue pour servir d'appui au support de données en forme de disque (80) et délimitée par une barrette (43;143) placée sur son pourtour externe, et peuvent pivoter sur un plan horizontal, à l'aide des différentes pièces pivotantes (50;150), par rapport aux éléments d'écartement (30) intercalés sur l'élément axial (5) en étant protégés de toute distorsion, l'élément axial (5) étant disposé, à une extrémité, dans un premier élément d'appui (25) du socle (20) et à l'autre extrémité, dans un deuxième élément d'appui (15) du couvercle (10), et étant protégé de toute distorsion.

2. Dispositif selon la revendication 1, **caractérisé en ce que** les éléments de support (40;140), pouvant pivoter, sur l'élément axial (5), autour de l'axe vertical (Z) de ce dernier, peuvent pivoter sur un plan horizontal, individuellement ou en groupe, soit en continu, soit selon des crans, avec un angle de 360° orienté en direction de la périphérie, par rapport au socle (20) ou au couvercle (10).

3. Dispositif selon les revendications 1 et 2, **caractérisé en ce que** chaque élément d'écartement (30) est relié de façon coordonnée aux pièces pivotantes (50;150) correspondantes des éléments de support (40;140), de telle façon que ces derniers puissent pivoter, soit individuellement, soit en groupe, les uns par rapport aux autres sur un plan horizontal, selon des crans représentant par exemple un angle de 90°.

4. Dispositif selon la revendication 1, **caractérisé en ce que** chaque élément de support (40;140) est muni, sur sa face supérieure, d'un premier renfoncement (40') destiné au support de données (80) et délimité par la plaque de fond (41;141), et, sur sa face inférieure située à l'opposé, dans la zone de la pièce pivotante (50;150), d'un deuxième renfoncement (48;148) destiné à l'élément d'écartement (30) en forme de disque et délimité par une plaque d'appui (47) de la pièce pivotante (50;150).

5. Dispositif selon l'une des revendications 1 à 4, c**aractérisé en ce que** chaque élément d'écartement (30) présente un ergot à cran d'arrêt (32) qui, lors du mouvement rotatif, orienté sur un plan horizontal, de chaque élément de support (40;140), peut s'enclencher dans au moins une encoche (48';148'), placée dans la zone de la pièce pivotante (50;150), sur la face interne du deuxième renfoncement (48;148).

6. Dispositif selon la revendication 5, **caractérisé en ce que** sont prévues plusieurs encoches (148',148'';154,154') placées sur la face interne du deuxième renfoncement (148) de la pièce pivotante (150), s'échelonnant selon un angle de 90° par rapport à l'axe de symétrie (S") de la pièce pivotante (150), et destinées à l'enclenchement de l'ergot à cran d'arrêt (32) placé sur l'élément d'écartement (30).

7. Dispositif selon les revendications 1 et 5, **caractérisé en ce que** l'élément d'écartement (30) en forme de disque est placé, protégé contre toute distorsion par serrage, sur l'élément axial (5) à l'aide d'un moyeu (34), et que le moyeu présente, sur une face, un élément à ressort (31) en forme d'arc et muni de l'ergot à cran d'arrêt (32), et qu'il est muni, sur la face opposée, d'une première et d'une deuxième série de bras de contact (35 à 39), répartis en direction de la périphérie et espacés les uns des autres par des évidements (35",38",39",37").

8. Dispositif selon la revendication 7, **caractérisé en ce que** l'élément à ressort (31) muni de l'ergot à cran d'arrêt (32) est façonné sur le moyeu (34) de l'élément d'écartement (30), en tant que segment monobloc ayant approximativement la forme d'un arc de cercle.

9. Dispositif selon les revendications 7 et 8, **caractérisé en ce que** les premiers bras de contact (35,36,37) de l'élément d'écartement (30) sont façonnés sur le moyeu (34), de façon décalée les uns par rapport aux autres selon un angle de 90°, et que les bras de contact (35,36,37) présentent, sur leur face tournée vers la plaque d'appui (47) de la pièce pivotante (50;150), un décrochement (35',36',37') conçu pour obtenir un appui, réparti de façon régulière en direction de la périphérie, sur l'élément de support correspondant (40;140).

10. Dispositif selon la revendication 7, **caractérisé en ce que** les deuxièmes bras de contact (38,39) placés entre les premiers bras de contact (35,36,37) sont disposés sur le moyeu (34) de la pièce d'écartement (30) de façon à ce que chaque élément de support (40;140) correspondant s'appuie, avec la pièce pivotante (50;150), sur la surface (38',39') des deuxièmes bras de contact (38,39).

11. Dispositif selon la revendication 1, **caractérisé en ce que** chaque élément de support (40;140) est muni d'au moins une poignée (55), placée sur le pourtour externe de la paroi avant (43) en forme d'arc de cercle, cette poignée (55) pouvant coulisser, par enclenchement, le long de la paroi avant (43) en forme d'arc de cercle, en continu ou selon des crans.

12. Dispositif selon la revendication 1, **caractérisé en ce que** le socle (20), avec le couvercle (10) et les éléments de support (40;140) placés sur l'élément axial (5) de manière superposée et de façon à pouvoir pivoter sur un plan horizontal, ainsi qu'avec les éléments d'écartement (30) intercalés, sont conçus comme une unité de construction (100).

13. Dispositif selon l'une des revendications 1 à 12, **caractérisé** par une plaque de support (220;320;420;520) destinée à accueillir et à fixer deux ou plusieurs unités de construction (100 et 101;l00 à 102;100 à 103;100 à 105), munies chacune des différents éléments (10,20,30,40;140), et qui sont écartées l'une de l'autre, sur la plaque de support (220;320;420;520), de façon à ce que les différents éléments de support (40;140) puissent pivoter sur un plan horizontal, de façon distincte et indépendante les uns des autres,. autour de l'axe vertical (Z) correspondant de l'élément axial (5), dans le but d'accueillir et/ou de retirer les supports de données (80).

14. Dispositif selon la revendication 13, **caractérisé en ce que** la plaque de support (220;320;420;520) est respectivement conçue, afin de recevoir et de pouvoir fixer les différentes unités de construction (100 et 101;100 à 102;100 à 103;100 à 105) espacées les unes des autres, comme un plateau plat rectangulaire, triangulaire, carré ou circulaire.

15. Dispositif selon les revendications 13 et 14, **caractérisé en ce que**, en plus du mouvement rotatif, orienté sur un plan horizontal, des différents éléments de support (40;140), les unités de construction (100 à 102; 100 à 103; 100 à 105) placées sur la plaque de support (320;420;520) peuvent tourner sur un plan horizontal, autour d'une colonne (321;421;521) disposée sur la plaque de support (320;420;520) et orientée en direction verticale.
